# EUROPÄISCHE PATENTSCHRIFT

(11) **EP 3 669 090 B1**
(45) Veröffentlichungstag und Bekanntmachung des Hinweises auf die Patenterteilung: **23.03.2022**
(21) Anmeldenummer: 18759248.0
(22) Anmeldetag: 07.08.2018
(51) Int. Cl.: F16B 21/16, H01R 13/627

(54) **STECKVERBINDERGEHÄUSE MIT EINER DRUCKKNOPFVERRIEGELUNG**
PLUG-IN CONNECTOR HOUSING WITH PUSH-BUTTON LOCK
BOÎTIER DE CONNECTEUR ÉLECTRIQUE AVEC SERRURE À BOUTON-POUSSOIR

(30) Priorität: 18.08.2017 DE 102017118918
(43) Veröffentlichungstag der Anmeldung: 24.06.2020
(73) Patentinhaber: HARTING Electric GmbH & Co. KG, 32339 Espelkamp (DE)
(72) Erfinder: SCHLEGEL, Bernard, 32369 Rahden (DE); BUßMANN, Frank, 32549 Bad Oeyenhausen (DE); HÜLSMEYER, Horst, 32339 Espelkamp (DE)
(86) Internationale Anmeldenummer: PCT/DE2018/100693
(87) Internationale Veröffentlichungsnummer: WO 2019/034202

(56) Entgegenhaltungen:
- EP-A1- 2 194 217
- CN-A- 103 375 460
- DE-T2- 69 206 597
- US-A1- 2013 210 258

## Beschreibung

Die Erfindung geht aus von einem System aus einem Steckverbindergehäuse und einer Druckknopfverriegelung nach der Gattung des unabhängigen Hauptanspruchs 1.

Desweiteren geht die Erfindung aus von einem Verfahren zur Entriegelung eines Steckverbindergehäuses gemäß der Gattung des unabhängigen Verfahrensanspruchs 12.

Weiterhin geht die Erfindung aus von einem Verfahren zur Verriegelung eines Steckverbindergehäuses gemäß der Gattung des unabhängigen Verfahrensanspruchs 14.

Derartige Systeme und Verfahren werden benötigt, um einen Steckverbinder komfortabel verriegeln und entriegeln zu können.

### Stand der Technik

Im Stand der Technik sind Verriegelungen für Steckverbinder bekannt.

Die Druckschrift EP 0 731 534 B1 offenbart einen U-förmigen Verriegelungsbügel, der um Lagerzapfen einer Gehäusehälfte schwenkbar ist. Der U-förmige Verriegelungsbügel besitzt Taschen, in die jeweils ein Federelement eingefügt ist. Diese Federelemente wirken beim Schließen des Verriegelungsbügels derart auf Verriegelungszapfen der anderen Gehäusehälfte ein, dass die Gehäusehälften federnd gegeneinandergepresst sind. Weiterhin ist der Einsatz eines kipphebelartigen Verriegelungselements als vorteilhafte Ausgestaltung offenbart. Durch diese Erfindung werden mit geringen Bedienkräften hohe Haltekräfte ermöglicht.

Die Druckschrift CN 103375460 A offenbart eine Board-to-Board-Schnellpositioniervorrichtung. Die Board-to-Board-Schnellpositioniervorrichtung ist einfach zu bedienen, fest zu montieren und genau zu positionieren.

Die Druckschrift DE 692 06 597 T2 offenbart ein druckknopfartiges Befestigungselement mit einem langgestreckten Schaftteil, einem Halteteil, das in einer Öffnung des Schaftteils positioniert ist, einem ersten Federteil, das um die äußere Oberfläche des Schaftteils angeordnet ist, einem Stiftteil, das eine Bewegung des Halteteils in eine Einfahr- oder Löseposition gestattet, bewegbar ist und einem zweiten Federteil, das in dem Hohlraum angeordnet ist und eine Kraft auf das Stiftteil in Richtung zu der Verriegelungsposition ausübt.

Die Druckschrift US 2013/210258 A1 offenbart eine Anschlussanordnung. Diese umfasst eine Buchse mit Anschlussstiften, einen Stecker mit passenden Anschlussstiften und eine Verriegelungsausnehmung zum Verriegeln des Steckers relativ zur Buchse. Das Verriegelungsystem enthält einen hohzylinderartigen Bolzen, der mit Kugeln ausgestattet ist, die zwischen einer Verriegelungsposition und einer im Bolzen versenkten Position beweglich sind. Weiterhin besitzt er und einen Stab zum Halten der Kugeln in der Verriegelungsposition. Der Bolzen besitzt weiterhn eine Feder für die Rückführung des Stabs in Richtung der kugelhaltenden Position. Der Stab besitzt hat eine Nockenoberfläche, die die Kugeln zurück in die verriegelnde Position schiebt, wenn die Feder die Stange in Richtung der Halteposition drängt.

Eine gattungsbildende Verriegelungsvorrichtung für ein zumindest zweiteiliges Gehäuse ist in der Druckschrift EP 2 194 217 A1 sowie ihrer Stammanmeldung DE 10 2008 060 561 A1 beschrieben. An mindestens einer von zwei gegenüberliegenden Seitenwänden des Gehäuseoberteiles ist innerhalb von kreisförmigen Anformungen jeweils ein von außen bedienbarer Betätigungsknopf angeordnet. Der Betätigungsknopf ist als kombinierter Dreh- und Druckknopf ausgebildet und steht im Eingriff mit einem im Inneren des Gehäuseoberteiles angeordneten Federhebel. Der Federhebel bewirkt in Abhängigkeit der Stellung des Betätigungsknopfes eine verrastende und/oder eine verriegelnde Verbindung zwischen den beiden Gehäuseteilen. Weiterhin wird offenbart, dass der Betätigungsknopf innerhalb einer kreisförmigen Anformung angeordnet ist. Darin befindet sich eine farblich markierte Kreisringdichtung. Durch diese farbliche Markierung ist die verriegelnde Verbindung zwischen den beiden Gehäuseteilen hervorgehoben.

Nachteilig bei diesem Stand der Technik ist, dass die Bedienung einen relativ großen Aufwand erfordert und leider nicht sofort für Jedermann selbsterklärend ist.

Das Deutsche Patent- und Markenamt hat in der Prioritätsanmeldung zu vorliegender Anmeldung den folgenden Stand der Technik recherchiert: EP 2 801 726 B1, CN 103 375 460 A, DE 196 43 708 C2, DE 10 2008 060 561 A1.

Ferner wurde die folgende Nicht-Patentliteratur recherchiert:
Krause, Werner: Konstruktionselemente der Reinmechanik, Bd 1, 3., aktualisierte Auflage. München: Hanser 2004, Seite 448-449.

### Aufgabenstellung

Die Aufgabe der Erfindung besteht darin, eine besonders komfortable und in ihrer Bedienung leicht verständliche Druckknopfverriegelung für ein Steckverbindergehäuse anzugeben.

Diese Aufgabe wird durch die Merkmale der unabhängigen Ansprüche gelöst.

Vorteilhafte Ausgestaltungen der Erfindung sind in den Unteransprüchen angegeben.

Die Druckknopfverriegelung für das Steckverbindergehäuse weist zumindest folgendes auf:
a. einen Druckknopfkörper, der an seinem ersten Ende beginnend und in Richtung seines gegenüberliegenden zweiten Endes verlaufend eine Entriegelungsöffnung zur Aufnahme eines Entriegelungsstifts besitzt;
b. den in der Entriegelungsöffnung relativ zum Druckknopfkörper beweglich angeordneten und dadurch betätigbaren Entriegelungsstift, der in seiner unbetätigten Stellung eine das Steckverbindergehäuse verriegelnde sowie in seiner betätigten Stellung eine das Steckverbindergehäuse entriegelnde Funktion erfüllen kann;
c. eine erste Feder zum Aufbringen einer ersten Rückstellkraft zum Überführen des Entriegelungsstifts von seiner betätigten Stellung in seine unbetätigte Stellung;
d. eine zweite Feder zum Erzeugen einer zweiten Rückstellkraft, zum Überführen des Druckknopfkörpers von einer das Steckverbindergehäuse verriegelnden in eine das Steckverbindergehäuse entriegelnde Position;
e. mindestens ein zumindest bereichsweise im oder am Druckknopfkörper beweglich angeordnetes Verriegelungselement zum Zusammenwirken mit dem Entriegelungsstift, dem Druckknopfkörper und dem Steckverbindergehäuse.

Das Steckverbindergehäuse kann aus zumindest zwei Gehäuseteilen bestehen, wobei zumindest eines der beiden Gehäuseteile an zwei einander gegenüberliegenden Gehäusewänden je eine Durchgangsöffnung aufweist. In jeder dieser Durchgangsöffnungen ist je ein Druckknopfkörper beweglich angeordnet. So können diese beiden Druckknopfkörper, in Abhängigkeit von der Stellung des Entriegelungsstifts, händisch zur Verriegelung des Steckverbindergehäuses aufeinander zu oder zur entsprechenden Entriegelung automatisch, insbesondere durch die zweite Feder, voneinander weg bewegbar sein.

Einerseits kann der Entriegelungsstift, insbesondere in seiner unbetätigten Stellung, dazu in der Lage sein, den Druckknopfkörper am Steckverbindergehäuse zu fixieren. Besonders vorteilhaft ist es, wenn sich der Druckknopfkörper dabei in seiner das Steckverbindergehäuse verriegelnden Position befindet. Schließlich besitzt dann auch der Entriegelungsstift - zumindest indirekt - eine das Steckverbindergehäuse verriegelnde Funktion.

Andererseits kann der Entriegelungsstift, z.B. in seiner betätigten Stellung, in der Lage sein, den Druckknopfkörper in dessen verriegelnder Position vom Steckverbindergehäuse zu lösen, damit der Druckknopfkörper mittels der zweiten Rückstellfeder automatisch in seine unverriegelnde Position überführt werden kann. Somit hat der Entriegelungsstift auch eine entriegelnde Funktion für das Steckverbindergehäuse.

Weiterhin kann der Entriegelungsstift den Druckknopfkörper in dessen unverriegelnder Position am Steckverbindergehäuse lösbar verrastend halten, so dass der Druckknopfkörper durch die zweite Rückstellkraft nicht weiter aus dem Steckverbindergehäuse herausgedrückt wird. Insbesondere kann der Entriegelungsstift sich dazu in einer Haltestellung befinden. Er bewirkt diese Funktion durch ein gleichzeitiges Zusammenwirken seiner eigenen Außenkontur mit dem Verrieglungselement und einer Innenkontur der Durchgangsöffnung des Steckverbindergehäuses.

Der Druckknopfkörper besitzt mindestens eine Verriegelungsöffnung zur zumindest teilweisen Aufnahme des mindestens einen Verriegelungselements, wobei die mindestens eine Verriegelungsöffnung die Oberfläche des Druckknopfkörpers mit seiner Entriegelungsöffnung verbindet. Das Verriegelungselement kann dann, insbesondere radial, beweglich in der Verriegelungsöffnung des Druckknopfkörpers angeordnet sein. Radial bedeutet dabei rechtwinklig zur Bewegungsrichtung des Druckknopfkörpers.

Durch seine Außenkontur wirkt der Entriegelungsstift grundsätzlich mit dem mindestens einen Verriegelungselement zusammen, um das Verriegelungselement durch die jeweilige Verriegelungsöffnung mehr oder weniger weit aus dem Druckknopfkörper heraus zu bewegen oder es - umgekehrt formuliert - mehr oder weniger tief im Druckknopfkörper zu versenken. Somit kann das Verriegelungselement mit der Außenkontur des Entriegelungsstifts zusammenwirken. Andererseits kann das Verriegelungselement auch mit einer Innenkontur der Durchgangsöffnung zusammenwirken. So können unter Zusammenwirkung der Innenkontur der Durchgangsöffnung und der Außenkontur des Entriegelungsstifts mittels des mindestens einen Verriegelungselements verschiedene mechanische Halte-, Ver- und Entriegelungszustände des Druckknopfkörpers am Steckverbindergehäuse sowie des Entriegelungsstifts am Druckknopfkörper erzeugt werden.

Zum einen kann der Entriegelungsstift in der vorgenannten Weise am Druckknopfkörper fixiert oder davon getrennt werden. Zum anderen kann dadurch auch der Druckknopfkörper am Steckverbindergehäuse fixiert oder davon gelöst werden. Weiterhin kann der Druckknopfkörper, insbesondere in seiner entriegelnden Position, lösbar am Steckverbindergehäuse gehalten werden. Die jeweilige exakte Funktionalität dieser Druckknopfmechanik lässt sich insbesondere durch die Formgebung der Innenkontur der Durchgangsöffnung und der Außenkontur des Entriegelungsstifts für die entsprechende Anwendung besonders vorteilhaft ausgestalten.

Die Außenkontur des Entriegelungsstifts kann mit dem mindestens einen Verriegelungselement zusammenwirken, um das mindestens eine Verriegelungselement in der dazugehörigen Verriegelungsöffnung, insbesondere radial, also senkrecht zur Bewegungsrichtung der Druckknopfkörper, d.h. nach innen oder nach außen, also in den Druckknopfkörper hinein oder hinaus, zu bewegen. Dies ist besonders vorteilhaft, weil das Verriegelungselement, z.B. durch Zusammenwirken mit der Außenkontur des Entriegelungsstifts, mehr oder weniger tief im Druckknopfkörper versenkt werden oder - anders formuliert - mehr oder weniger weit aus dem Druckknopfkörper herausgedrückt werden kann, um den Druckknopfkörper am Steckverbindergehäuse zu fixieren oder ihn davon zu lösen. Umgekehrt kann die Innenkontur der Durchgangsöffnung des Steckverbindergehäuses das mindestens eine Verriegelungselement in den Druckknopfkörper hinein drücken, um das Verriegelungselement, z.B. beim Bewegen des Druckknopfkörpers durch die Durchgangsöffnung, in seiner entsprechenden entriegelnden Position am Druckknopfkörper zu fixieren oder es, z.B. in der verriegelnden Position des Druckknopfkörpers, wieder freizugeben, so dass es durch die erste Rückstellkraft in seine unbetätigte Stellung zurückschnellt und für seine nächste Betätigung zur Verfügung steht.

Insbesondere kann die Innenkontur der Durchgangsöffnung über einen ganzen Bereich im Querschnitt geradlinig ausgestaltet sein. Insbesondere kann die Durchgangsöffnung dazu einen zylindrischen Bereich besitzen. Dann kann der Entriegelungsstift solange am Druckknopfkörper fixiert sein, wie der Druckknopfkörper sich mit dem Verriegelungselement/ der entsprechenden Verriegelungsöffnung über diesen zylindrischen Bereich bewegt. Mit anderen Worten einfach formuliert: Der Entriegelungsstift kann sich relativ zum Steckverbindergehäuse in diesem Bereich mit dem Druckknopfkörper mitbewegen, denn er wird vom Verriegelungselement am Druckknopfkörper gehalten.

Die Außenkontur des Entriegelungsstifts umfasst eine oder mehrere Entriegelungsausnehmungen, die eine Rückstellschräge aufweisen.

Die Entriegelungsausnehmung hat den Vorteil, dass der Entriegelungsstift bei entsprechender Positionierung damit dafür sorgen kann, dass das Verriegelungselement tiefer in den Druckknopfkörper eintaucht und somit den Druckknopfkörper vom Steckverbindergehäuse löst.

Mit der Rückstellschräge wird weiterhin unter Einwirkung der ersten Rückstellkraft, ein automatisches Halten des Druckknopfkörpers in seiner unverriegelnden Position am Steckverbindergehäuse erreicht. Der Entriegelungsstift befindet sich dann in seiner Haltestellung. Diese Haltestellung kann der Entriegelungsstift durch die erste Feder und mittels einer Rückstellschrägen seiner Entriegelungsausnehmung durch eine geringfügige automatische Bewegung in Richtung seiner unbetätigten Stellung einnehmen. Dabei wird durch die Rückstellschräge das Verriegelungselement aus dem Drückknopfkörper in eine in der Durchgangsöffnung dafür vorgesehene Halteausnehmung der Durchgangsöffnung gedrückt und verrastet durch den federnden Druck der Rückstellschräge lösbar daran.

Der Begriff "lösbar" bedeutet in diesem Zusammenhang, dass der Druckknopfkörper weiterhin händisch durch Druck gegen sein erstes Ende in das Steckverbindergehäuse einsteckbar ist. Schließlich kann das Verriegelungselement dabei den Entriegelungsstift geringfügig gegen die erste Rückstellkraft der ersten Feder bewegen, um tiefer in den Druckkopfkörper einzutauchen.

Die Haltestellung kann somit durch das Aufbringen einer, der zweiten Rückstellkraft entgegengesetzt wirkenden Betätigungskraft händisch überwunden werden. D.h. die beiden einander am Steckverbindergehäuse bevorzugt gegenüberliegenden Druckknopfkörper können ohne die Notwendigkeit einer separaten händischen Betätigung des Entriegelungsstifts, also durch einfaches "Zusammendrücken", aus der unverriegelnden Haltestellung auf einander zu bewegt werden. Das Steckverbindergehäuse kann so also durch händisches Zusammendrücken der beiden Druckknopfkörper verriegelt werden. Die Betätigung der Verriegelung reduziert sich also auf ein einfaches Zusammendrücken der Druckknopfkörper. Dies ist besonders vorteilhaft, da es einen hohen Bedienkomfort gewährleistet und das Bedienkonzept zudem weitgehend selbsterklärend ist.

Beim darauffolgenden Vorgang der Verriegelung bewegt sich der Entriegelungsstift zunächst mit dem Druckknopfkörper relativ zum Steckverbindergehäuse. Dabei gleitet das Verriegelungselement, wie oben beschrieben, an einem geradlinigen Bereich der Innenkontur der Durchgangsöffnung entlang. Spätestens bei Erreichen der Verriegelungsausnehmung wird das Verriegelungselement jedoch durch die Rückstellschräge unter Einwirkung der ersten Rückstellkraft zunächst etwas tiefer in die Entriegelungsausnehmung aufgenommen, taucht also einerseits wieder etwas tiefer in den Druckknopfkörper ein und entfernt sich andererseits aus der Verriegelungsausnehmung der Durchgangsöffnung. Dadurch schnellt der Entriegelungsstift durch die erste Rückstellkraft in seine unbetätigte Position zurück und fixiert mit seiner Außenkontur den Druckknopfkörper in seiner verriegelnden Position endgültig am Steckverbindergehäuse.

Zur Entriegelung kann z.B. mit einem spitzen Gegenstand, etwa einem Schraubendreher, einem Stift, einem Nagel, etc. den Entriegelungsstift zu Betätigung in den Druckknopfkörper hineingeschoben werden. Dies hat den Vorteil, dass eine unbeabsichtigte Entriegelung vermieden wird.

In einer alternativen Ausgestaltung kann der Entriegelungsstift auch aus dem Druckknopfkörper hervorragen, indem es zum ersten Ende des Druckknopfkörpers hin eine entsprechende Länge aufweist. Zur Entriegelung genügt dann ein händisches Hineinstecken in den Druckknopfkörper. Diese Variante ist für die Bedienung noch etwas komfortabler, weil kein Werkzeug benötigt wird. Aus dem gleichen Grund ist aber die Gefahr einer unbeabsichtigten Entriegelung höher als bei der vorgenannten Variante.

Erfindungsgemäß handelt es sich bei dem mindestens einen Verriegelungselementen um eine Verriegelungskugel. Dies hat unter anderem den Vorteil, dass eine Fehlausrichtung der Verriegelungselemente vermieden wird. Solche Verriegelungskugeln können beispielsweise in den Verriegelungsöffnungen nicht verkanten und weisen zu jeder Seite hin je eine runde Angriffsfläche auf, was das Zusammenwirken mit dem Entriegelungsstift und der Durchgangsöffnung erheblich erleichtert.

Die Entriegelungsöffnung kann im Wesentlichen zylindrisch ausgebildet sein und der Entriegelungsstift kann ebenfalls zylindrisch ausgebildet sein oder zumindest einen im Wesentlichen zylindrischen Entriegelungsabschnitt besitzen. Der Durchmesser des Entriegelungsstifts und/oder der Durchmesser seines zylindrischen Abschnitts kann kleiner oder gleich dem Durchmesser der Entriegelungsöffnung/ ihres Entriegelungsabschnitts sein, wodurch der Entriegelungsstift in Richtung der Symmetrieachse der besagten Zylinderform im Druckknopfkörper beweglich und dadurch betätigbar ist. Dies ist besonders vorteilhaft, weil er so von seiner unbetätigten Position insbesondere händisch in seine betätigte Position überführbar ist und/oder von seiner betätigten Position automatisch, insbesondere durch die erste Rückstellkraft, in seine unbetätigte Position überführbar ist.

Insbesondere kann es sich für bestimmte Anordnungen als vorteilhaft und zweckmäßig erweisen, wenn der Entriegelungsstift in seiner Bewegungsrichtung mindestens halb so lang ist wie der Druckknopfkörper und kürzer ist als die Entriegelungsausnehmung. Dadurch kann er einerseits in der Entriegelungsausnehmung versenkbar und beweglich sein und ist andererseits lang genug, um die für die oben beschriebene Mechanik erforderliche Außenkontur zum Zusammenwirken mit den Verriegelungselementen zur Verfügung zu stellen. Dabei und im Folgenden wird die Länge des Druckknopfkörpers grundsätzlich von seinem ersten bis zu seinem zweiten Ende gemessen.

In einer bevorzugten Ausgestaltung handelt es sich bei der ersten Feder um eine Spiralfeder. Diese kann in der Entriegelungsausnehmung zwischen dem zweiten Ende des Druckknopfkörpers und zumindest an einem Teil des Entriegelungsstifts angeordnet sein, um die besagte erste Rückstellkraft auf ihn auszuüben. Insbesondere kann der Entriegelungsstift seinerseits eine, insbesondere im Wesentlichen zylindrische Aufnahmeausnehmung, z.B. eine in Richtung der Symmetrieachse der Zylinderform verlaufende Bohrung, besitzen, in welche die Spiralfeder eingreift. Dies hat den Vorteil, dass in der Entriegelungsausnehmung mehr Platz für die erste Feder, insbesondere auch in ihrem komprimierten Zustand, zur Verfügung steht.

Die zweite Feder greift einerseits am Steckverbindergehäuse und andererseits am Druckknopfkörper an. Dazu kann der Druckknopfkörper an seinem ersten Ende einen Druckknopfkopf besitzen. Dieser besteht in einer Verbreiterung, insbesondere eine scheibenartige Verbreiterung, die im verriegelten Zustand an das Gehäuse schlägt und so ein tieferes Eindringen des Druckknopfkörpers in die Durchgangsöffnung vermeidet.

Bei der zweiten Feder kann es sich bevorzugt um eine sogenannte "Kegelfeder", handeln, die sich von einer üblichen Spiralfeder dadurch unterscheidet, dass sich der Durchmesser jeder Spirale von dem der vorangegangenen kontinuierlich ändert, so dass die Kegelfeder sich von einem zum anderen Ende hin konisch verjüngt oder vergrößert, also - ihrem Namen entsprechend - kegelförmig ausgestaltet ist. Die Verwendung einer Kegelfeder hat den Vorteil, dass sie einerseits an die Form des Steckverbindergehäuses und anderseits an die Form des Druckknopfkörpers angepasst sein kann, im Gegensatz zu einer einfachen Spiralfeder mit gleichbleibendem Durchmesser. Ein weiterer besonderer Vorteil besteht darin, dass die Kegelfeder im komprimierten Zustand bauformbedingt einen geringeren Platzbedarf aufweist, da die Spiralen idealerweise ineinander und somit innerhalb einer Fläche angeordnet sein können.

Die Durchgangsöffnungen weisen jeweils mindestens eine Verriegelungsausnehmung auf, die mit den Verriegelungselementen zusammenwirkt, um den Druckknopfkörper am Steckverbindergehäuse zu fixieren oder freizugeben.

Diese mindestens eine Verriegelungsausnehmung dient vorteilhafterweise dazu, den Druckknopfkörper in seiner verriegelnden Stellung bei einem unbetätigten Entriegelungsstift am Steckverbindergehäuse zu fixieren. Dazu drückt der Entriegelungsstift in dieser Stellung mit seiner Außenkontur das mindestens eine Verriegelungselement, insbesondere die mindestens eine Verriegelungskugel, in die mindestens eine, insbesondere umlaufende, Verriegelungsausnehmung hinein, wodurch der Druckknopfkörper am Steckverbindergehäuse fixiert ist.

Im Gegensatz dazu kann der Entriegelungsstift in seiner betätigten Stellung mit mindestens einer, insbesondere umlaufenden, an seiner Oberfläche befindlichen Entriegelungsausnehmung an dem mindestens einen Verriegelungselement angeordnet sein. Dadurch wird ein tieferes Eintauchen des Verrieglungselements in den Druckknopfkörper ermöglicht, um so das mindestens eine Verriegelungselement aus der Verriegelungsausnehmung des Steckverbindergehäuses zu entfernen. Dadurch kann die vorgenannte Fixierung des Druckknopfkörpers gelöst werden.

Weiterhin kann der Druckknopfkörper an seinem zweiten Ende einen konischen Verlauf besitzen, um damit einen weiteren Ver-/ Entriegelungsmechanismus des Steckverbindergehäuses zu betätigen.

Ein Verfahren zur Entriegelung eines Steckverbindergehäuses mit einer Druckknopfverriegelung, insbesondere einer Druckknopfverriegelung, wie sie zuvor in diversen Varianten beschrieben wurde und/oder einem System aus einer solchen Druckknopfverriegelung und dem zuvor beschriebenen Steckverbindergehäuse, wie es zuvor in diversen Varianten beschrieben wurde, weist die folgenden Schritte auf:
A. Betätigen eines Entriegelungsstifts durch händisches Einschieben des Entriegelungsstifts in eine Entriegelungsöffnung eines am Steckverbindergehäuse fixierten Druckknopfkörpers entgegen einer ersten Rückstellkraft einer ersten Feder, dadurch
B. tieferes Eintauchen des mindestens einen Verriegelungselements in den Druckknopfkörper durch Zusammenwirken der Außenkontur des Entriegelungsstifts mit dem Verriegelungselement, dadurch
C. Lösen der Fixierung des Druckknopfkörpers vom Steckverbindergehäuse durch Zusammenwirken des Verriegelungselements mit einer Innenkontur einer Durchgangsöffnung, in welcher der Druckknopfkörper beweglich gehalten ist, dadurch
D. automatisches Überführen des Druckknopfkörpers in eine das Steckverbindergehäuse entriegelnde Position durch eine zweite Rückstellkraft einer zweiten Feder, und
E. Positionieren des mindestens einen Verriegelungselements an einer Halteausnehmung des Steckverbindergehäuses und gleichzeitig Hineindrücken des Verriegelungselements in die Halteausnehmung durch die erste Feder in Zusammenwirkung mit einer Rückstellschrägen des Entriegelungsstifts.

Das im Verfahrensschritt B beschrieben Zusammenwirken der Außenkontur des Entriegelungsstifts mit dem Verriegelungselement kann vorteilhafterweise in einem Bewegen mindestens einer Entriegelungsausnehmung des Entriegelungsstifts hin zu dem mindestens einen Verriegelungselement bestehen, wodurch das besagte tiefere Eintauchen des mindestens einen Verriegelungselements in den Druckknopfkörper ermöglicht wird.

Der Druckknopfkörper kann an seinem zweiten Ende einen konischen Endabschnitt besitzen, an dem er sich zu seinem zweiten Ende hin konisch verjüngt.

In einem weiteren Verfahrensschritt F kann dieser konische Endabschnitt des Druckknopfkörpers mit einer Angriffsschrägen eines Ver-/ Entriegelungsmechanismus des Steckverbindergehäuses zusammenwirken.

Ein Verfahren zur Verriegelung eines Steckverbindergehäuses mit einer Druckknopfverriegelung, insbesondere einer Druckknopfverriegelung, wie sie zuvor in diversen Varianten beschrieben wurde und/oder einem System aus einer solchen Druckknopfverriegelung und dem zuvor beschriebenen Steckverbindergehäuse, wie es zuvor in diversen Varianten beschrieben wurde, weist die folgenden Schritte auf:
I. Händisches Hineindrücken mindestens eines zunächst entriegelten Druckknopfkörpers in eine Durchgangsöffnung einer Gehäuseseite eines Steckverbindergehäuses, in welcher der Druckknopfkörper beweglich gehaltenen ist; dadurch
II. automatisches Halten eines in dem Druckknopfkörper aufgenommenen Entriegelungsstifts in einer den Entriegelungsstift am Druckknopfkörper fixierenden Position;
III. Bewegen des Druckknopfkörpers mit seiner mindestens einen Verriegelungsöffnung und einem darin aufgenommenen mindestens einen Verriegelungselement zu einer Verriegelungsausnehmung der Durchgangsöffnung;
IV. Fixieren des Druckknopfkörpers am Steckverbindergehäuse in seiner verriegelnden Position durch ein Zusammenwirken zwischen dem jeweiligen Entriegelungsstift, dem jeweiligen Druckknopfkörper und der jeweiligen Durchgangsöffnung mit dem mindestens einen Verriegelungselement mittels der Verriegelungsausnehmung der Durchgangsöffnung.

In den Verfahrensschritten II und III wird der Entriegelungsstift am Druckknopfkörper durch ein Zusammenwirken des Verriegelungselements mit der Innenkontur der Durchgangsöffnung des Steckverbindergehäuses, die dazu das Verriegelungselement auch während der in Schritt III beschriebenen Bewegung des Druckknopfkörpers über den dafür notwendigen Bereich tief genug in den Druckknopfkörper hineindrückt, um den Entriegelungsstift an seiner Entriegelungsausnehmung am Druckknopfkörper zu halten.

Weiterhin kann in Verfahrensschritt IV der Druckknopfkörper am Steckverbindergehäuse durch Zusammenwirken des Verriegelungselements mit einer Außenkontur des Entriegelungsstifts fixiert werden. Insbesondere gleitet das Verriegelungselement, bei dem es sich bevorzugt um eine Verriegelungskugel handelt, durch Zusammenwirken der Rückstellschräge unter Einwirkung der ersten Rückstellkraft tiefer in die Verriegelungsausnehmung der Innenkontur der Durchgangsöffnung des Steckverbindergehäuses und gibt somit an seiner gegenüberliegenden Seite den Entriegelungsstift frei. Der Entriegelungsstift kann so mittels der ersten Rückstellkraft in seine unbetätigte Position schnellen und so das Verriegelungselement in der Verriegelungsausnehmung und damit den Druckknopfkörper an dem Steckverbindergehäuse in seiner verriegelnden Position fixieren. Somit befindet sich also auch der Entriegelungsstift in einer das Steckverbindergehäuse verriegelnden Stellung, die seiner unbetätigten Stellung entspricht.

In Verfahrensschritt IV kann dieser konische Endabschnitt mit einem weiteren Ver-/ Entriegelungsmechanismus des Steckverbindergehäuses zusammenwirken.

So können die beiden Gehäuseteile mittels des konischen Endabschnitts durch Hineindrücken des Druckknopfkörpers insbesondere durch diesen Ver-/ Entriegelungsmechanismus aneinander verriegelt und zusätzlich zur Abdichtung gegeneinandergepresst werden.

Somit wird das Steckverbindergehäuse mit einer einzigen Aktion, beispielsweise durch das Zusammenpressen zweier einander gegenüberliegend am Steckverbindergehäuse angeordneter Druckknopfkörper, sowohl verriegelt als auch abdichtend zusammengepresst werden, was bei der Bedienung einen besonderen Vorteil darstellt.

### Ausführungsbeispiel

Ein Ausführungsbeispiel der Erfindung ist in den Zeichnungen dargestellt und wird im Folgenden näher erläutert. Es zeigen:
- Fig. 1a,: b eine Druckknopfverriegelung in einer Explosionsdarstellung;
- Fig. 2a: eine Durchgangsöffnung eines Steckverbindergehäuses;
- Fig. 2b: einen Druckknopfkörper;
- Fig. 2c: einen Entriegelungsstift;
- Fig. 2d: den Druckknopfkörper im Querschnitt;
- Fig. 2e, f: eine Kegelfeder im entspannten und im komprimierten Zustand;
- Fig. 3a-d: einen Verriegelungsvorgang einer Druckknopfverriegelung;
- Fig. 4a-d: einen Entriegelungsvorgang der Druckknopfverriegelung;

- Fig. 5a, b: ein Steckverbindergehäuse im entriegelten und im verriegelten Zustand.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

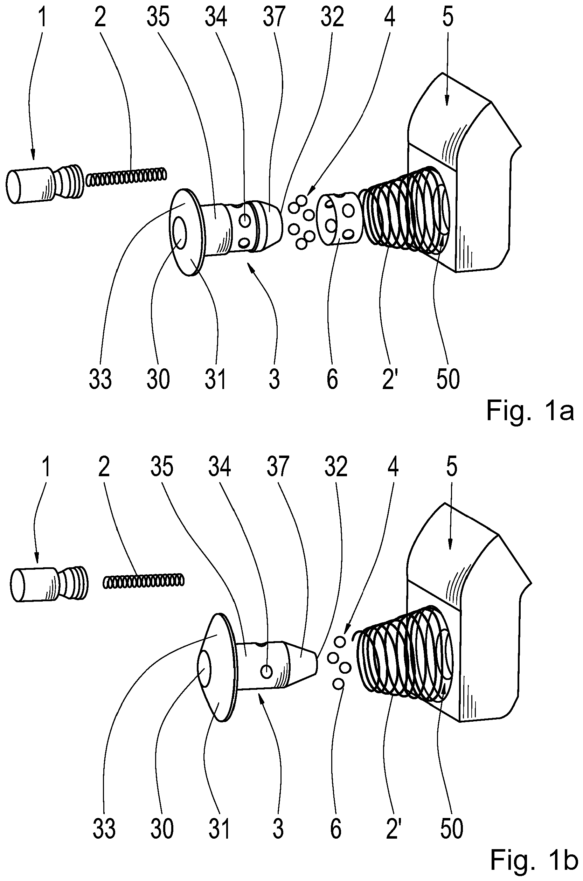

Die Fig. 1a und b zeigen je eine Druckknopfverriegelung in leicht unterschiedlichen Ausführungen in einer Explosionsdarstellung. Die jeweilige Druckknopfverriegelung besitzt grundsätzlich Folgendes:
- Einen Entriegelungsstift 1 mit einer ersten Feder 2, die als Spiralfeder ausgeführt ist,
- einen Druckknopfkörper 3 mit einer im Wesentlichen zylinderförmigen Entriegelungsöffnung 30 sowie mehreren Verriegelungsöffnungen 34, wobei am Druckknopfkörper ein erstes 31 Ende und ein zweites Ende 32 bezeichnet ist und der Druckknopfkörper an seinem ersten Ende einen tellerähnlichen Druckknopfkopf 33 aufweist;
- mehrere Verriegelungselemente, die in Form von Verriegelungskugeln 4 ausgeführt sind, und die dafür vorgesehen sind in den Verriegelungsausnehmungen 34 angeordnet zu werden;
- eine zweite Feder 2', die als Kegelfeder ausgeführt ist;
- eine Durchgangsöffnung 50 eines Steckverbindergehäuses 5.

Zusätzlich besitzt die Ausführung, die in der Fig. 1a dargestellt ist, einen Kugelkäfig 6, der durch ein zylinderförmig gebogenes Blech gebildet ist. In einer anderen Ausführung kann es sich bei dem Kugelkäfig 6 auch um ein Rohr handeln. Der Kugelkäfig 6 weist nicht näher bezeichnete kreisrunde Halteöffnungen auf, deren Durchmesser kleiner ist als der Durchmesser der Verriegelungskugeln 4.

Bei der Montage wird der Entriegelungsstift 1 mit der ersten Feder 2 voran in die Entriegelungsausnehmung 30 gesteckt. Dadurch wird die erste Feder 2 unter mechanische Spannung gesetzt und erzeugt so eine erste Rückstellkraft. Die Verriegelungskugeln 4 werden in den Verriegelungsöffnungen 34 angeordnet und werden in der Ausführung, die in der Fig. 1a dargestellt ist, von dem Kugelkäfig 6 umschlossen um ein Herausfallen der Verriegelungskugeln 4 zu verhindern. Bei der in der Fig. 1b dargestellten Ausführung werden die Verriegelungsöffnungen 34 nach Einführung der Verriegelungskugeln 4 zu diesem Zweck verprägt, um ein Herausfallen der Verriegelungskugeln 4 aus dem Druckknopfkörper 3 zu verhindern.

Durch das so bewirkte Halten der Verriegelungskugeln 4 in den Verriegelungsöffnungen 34 der Druckknopfkörpers 3 ist auch der Entriegelungsstift 1 in der Entriegelungsausnehmung 30 des Druckknopfkörpers 3 unverlierbar gehalten.

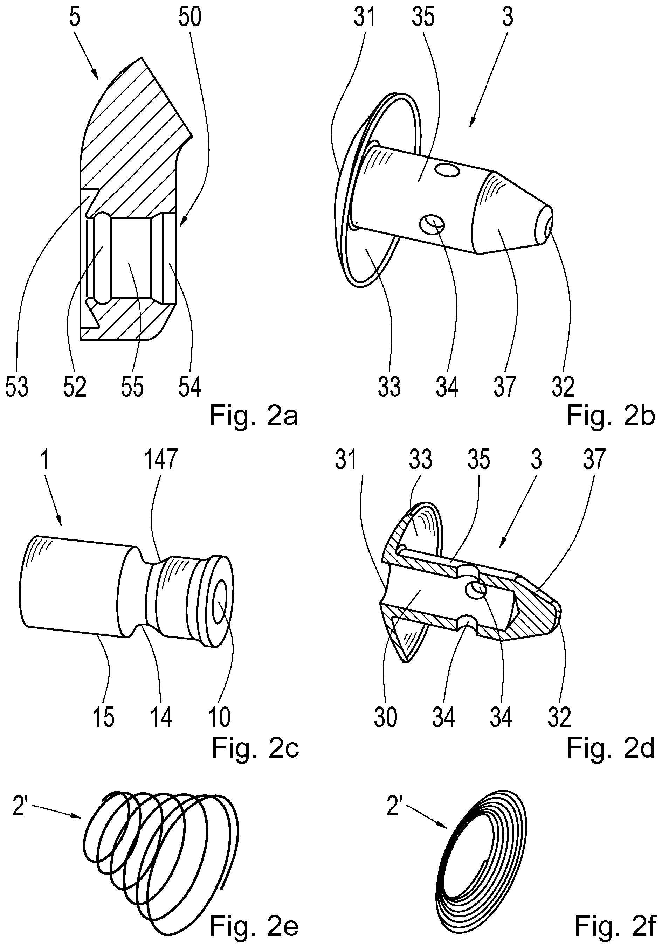

Die Fig. 2a zeigt einen Ausschnitt eines Steckverbindergehäuses 5 mit einer im Wesentlichen zylinderförmige Durchgangsöffnung 50. Diese Durchgangsöffnung 50 besitzt eine Innenkontur mit einer ringförmig umlaufenen Verriegelungsausnehmung 54. Weiterhin besitzt sie eine ringförmig umlaufende Halteausnehmung 52. Zwischen der Verriegelungsausnehmung 54 und der Halteausnehmung 52 befindet sich ein zylindrischer Bereich. Außerdem besitzt sie an ihrem ersten Ende eine Aufnahme 53 für einen Druckknopfkopf 33 des Druckknopfkörpers 3 sowie für die zweite Feder 2' oder zumindest einen Teil davon.

Die Fig. 2b zeigt den Druckknopfkörper 3 in einer 3D-Darstellung und die Fig. 2d zeigt ihn in einer Querschnittsdarstellung.

Der Druckknopfkörper 3 besitzt ein erstes Ende 31 und ein zweites Ende 32. Am ersten Ende 31 besitzt der Druckknopfkörper 3 einen kugeloberflächensegmentförmig ausgestalteten, tellerähnlichen Druckknopfkopf 33, der ein Eintauchen des Druckknopfkörpers 3 in die Durchgangsöffnung 50 verhindert. Daran angrenzend weist er einen zylindrischen Abschnitt 35 mit Verriegelungsöffnungen 34 auf und daran anschließend einen konischen Endabschnitt 37, der sich zum zweiten Ende 32 hin verjüngt. Am ersten Ende beginnend besitzt der Druckknopfkörper die besagte zylinderförmige Entriegelungsausnehmung 30, welche über die Verriegelungsöffnungen 34 mit der Oberfläche des Druckknopfkörpers 3 verbunden ist.

Der in der Fig. 2c dargestellte Entriegelungsstift 1 besitzt eine im Wesentlichen zylindrische Form, d.h. zumindest einen zylindrischen Stiftabschnitt 15 mit einer umlaufenden Entriegelungsausnehmung 14, die eine Rückstellschräge 147 aufweist. Weiterhin besitzt der Entriegelungsstift 1 eine Aufnahmeausnehmung 10 zur Aufnahme der ersten Feder 2. Diese erste Feder 2, die als Spiralfeder ausgeführt ist, kann im komprimierten Zustand vollständig oder zumindest größtenteils innerhalb dieser Aufnahmeausnehmung 10 angeordnet sein.

Die Fig. 2e und 2f zeigen die zweite Feder 2', die in Form einer Kegelfeder ausgeführt ist, in einem entspannten und einem komprimierten Zustand.

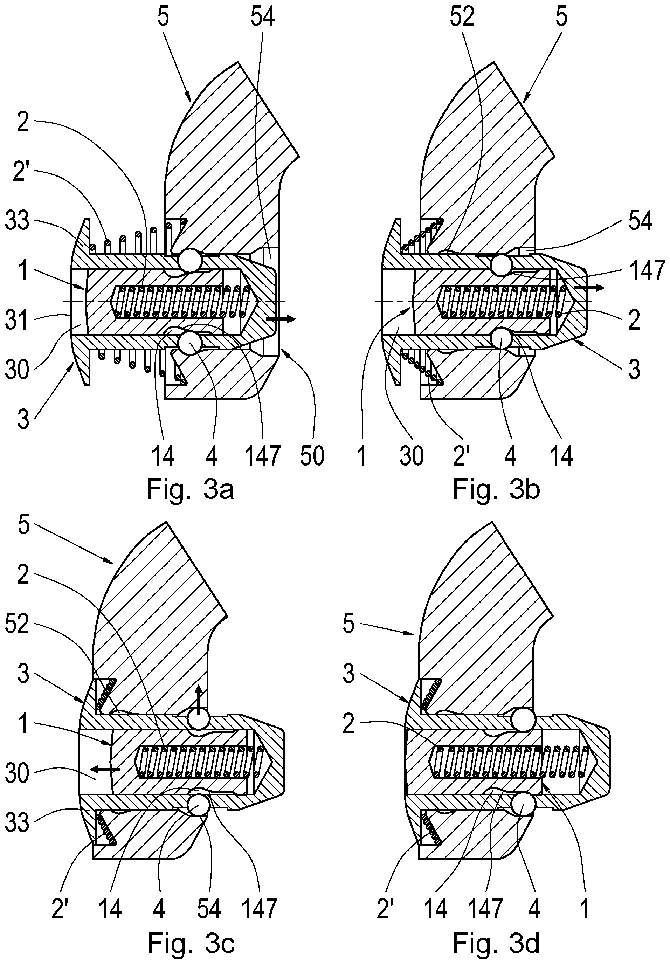

Die Fig. 3a bis 3d stellen einen Verriegelungsvorgang dar.

Der Druckknopfkörper 3 wird, wie in der Fig. 3a gezeigt, händisch tiefer in die Durchgangsöffnung 50 des Steckverbindergehäuses 5 hineingesteckt, so dass er sich mit seinem ersten Ende 31 und seinem Druckknopfkopf 33 auf das Steckverbindergehäuse 5 zubewegt.

Dadurch wird die Entriegelungskugel 4 von der Innenkontur der Durchgangsöffnung 50, insbesondere der dazugehörigen Halteausnehmung 52, tiefer in die Entriegelungsausnehmung 14 gedrückt. Durch ihr Zusammenwirken mit der Rückstellschrägen 147 wird dabei der Entriegelungsstift 1, wie in der Fig. 3b dargestellt, automatisch gegen die erste Rückstellkraft der ersten Feder 2 sogar noch etwas tiefer in die Entriegelungsöffnung 30 hineinbewegt. Dieser Vorgang findet automatisch ohne zusätzliche händische Betätigung statt, d.h. der Entriegelungsstift 1 bewegt sich bereits durch das händische Hineindrücken des Druckknopfkörpers 3 in die Durchgangsöffnung 50 automatisch relativ zum Druckknopfkörper 3 zunächst etwas tiefer in die Entriegelungsöffnung 30 hinein. In der daraufhin erreichten Relativposition des Entriegelungsstifts 1 zum Druckknopfkörper 3 bewegt sich der Entriegelungsstift 1 zusammen mit dem Druckknopfkörper 3 mit der Verriegelungskugel 4 entlang des zylindrischen Bereichs 55 in Richtung der Verriegelungsausnehmung 54.

Die Fig. 3c zeigt, wie die Entriegelungskugel 4 bei Erreichen der Position der Verriegelungsausnehmung 54 durch die erste Rückstellkraft der ersten Feder 2 und die Rückstellschräge 147 in die Verriegelungsausnehmung 54 gedrückt wird. Die zweite Rückstellkraft der zweiten Feder 2' kommt in diesem Moment aufgrund der ihr entgegengesetzten Betätigungskraft, welche auf den Druckknopfkörper 3 wirkt, nicht zum Tragen.

Dadurch, dass die Verriegelungskugel 4 nun tiefer in die Verriegelungsausnehmung 54 aufgenommen wird, also gleichzeitig aus der Entriegelungsausnehmung 14 des Entriegelungsstifts 1 entfernt wird, löst sich der Entriegelungsstift 1 von seiner Fixierung an dem Druckknopfkörper 5 und schnellt in seine unbetätigte Stellung, wie es in der Fig. 3d dargestellt ist. Gleichzeitig fixiert die Außenkontur des Entriegelungsstifts 1 den Druckknopfkörper 3 in seiner verriegelnden Position am Steckverbindergehäuse 5.

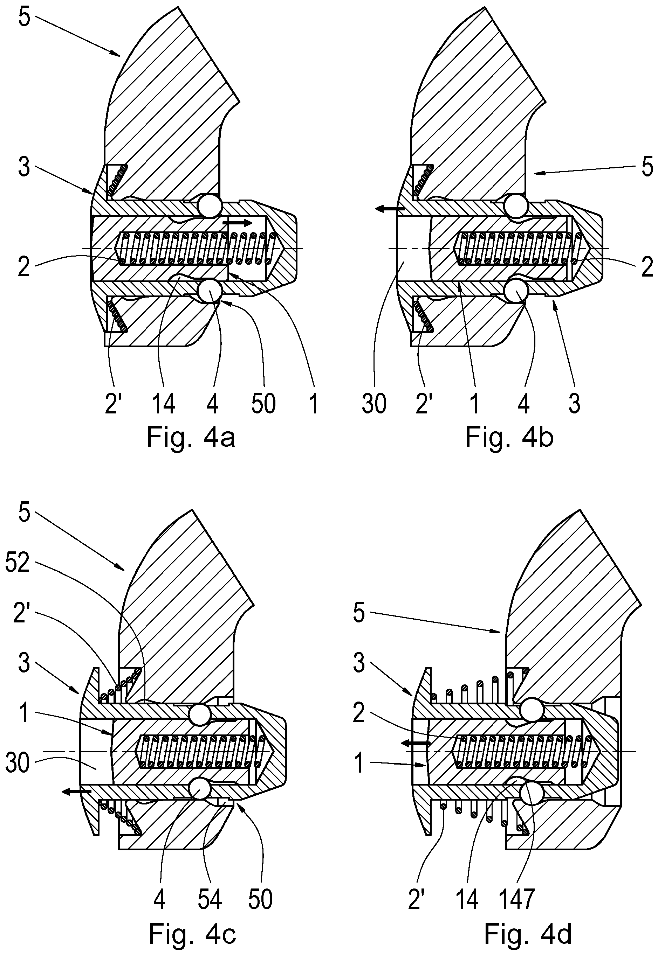

Die Fig. 4a bis 4f zeigen einen Entriegelungsvorgang. Dazu wird der Entriegelungsstift 1, wie in der Fig. 4a dargestellt, z.B. mit einem Werkzeug, wie einem Schraubendreher oder einen Stift o.ä., in Pfeilrichtung in die Entriegelungsöffnung 30 des Druckknopfkörpers 3 hineingeschoben.

Aus der Fig. 4b geht hervor, wie die Verriegelungskugel 4 in die Entriegelungsausnehmung 14 des Entriegelungsstifts 1 hineingedrückt wird. Dies geschieht durch die auf den Druckknopfkörper 3 wirkende zweite Rückstellkraft der zweiten Feder 2', unter Zusammenwirkung mit der Innenkontur der Durchgangsöffnung 50, nämlich mit der Verriegelungsausnehmung 54, die dazu ihrerseits eine nicht näher bezeichnete Schräge besitzt. Dabei ist zu beachten, dass die zweite Rückstellkraft im Gegensatz zum vorgenannten Verriegelungsvorgang, hier nicht durch eine entgegengesetzte Betätigungskraft kompensiert wird. Stattdessen wird die erste Rückstellkraft der ersten Feder 2 zu diesem Zeitpunkt durch diejenige Betätigungskraft kompensiert, welche auf den Entriegelungsstift 1 in Richtung seiner betätigten Stellung wirkt.

In der Fig. 4c ist dargestellt, wie der Druckknopfkörper 3 von der zweiten Rückstellkraft, d.h. von der zweiten Feder 2', aus dem Steckverbindergehäuse 5 herausgedrückt wird, sobald die Verriegelungskugel 4 aus der Verriegelungsausnehmung 54 entfernt wurde.

Die Fig. 4d zeigt die Anordnung schließlich in einem unverriegelten Zustand. Die Verriegelungskugel 4 taucht dabei in die Halteausnehmung 52 des Steckverbindergehäuses 5 ein. Der Entriegelungsstift 1 ist mit seiner Rückstellschrägen 147 an der Verriegelungskugel 4 gehalten und befindet sich in seiner Haltestellung.

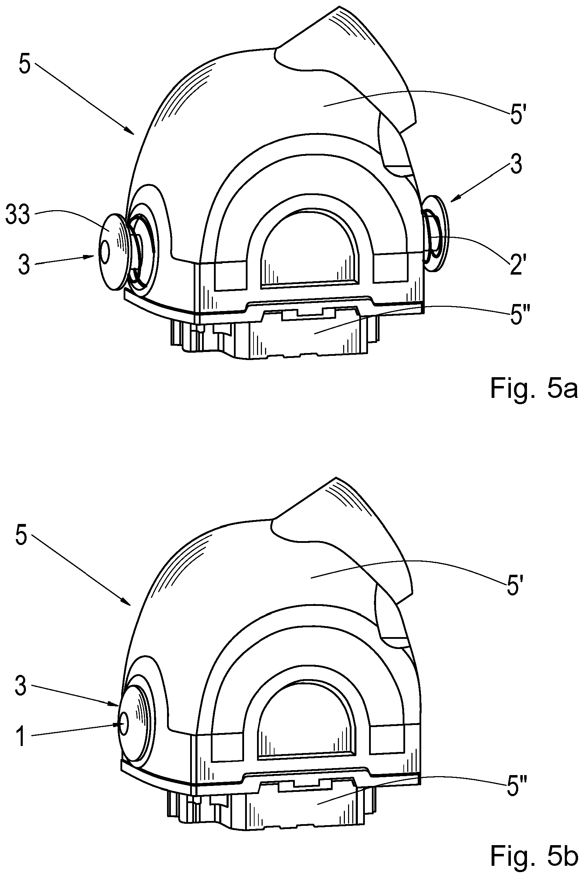

Die Fig. 5a und 5b zeigen das Steckverbindergehäuse 5, bestehend aus einem ersten Gehäuseteil 5' und einem zweiten Gehäuseteil 5", im unverriegelten und verriegelten Zustand. Bei dem zweiten Gehäuseteil 5" handelt es sich um ein sogenanntes "Anbaugehäuse", das z.B. an einem Wanddurchbruch angebracht sein kann. Das erste Gehäuseteil 5' wird, wie in der Zeichnung dargestellt, darauf gesteckt.

Durch Zusammendrücken der beiden Druckknopfkörper 3 wird das zweite Gehäuseteil 5" am ersten Gehäuseteil 5' verriegelt, d.h. das gesamte Steckverbindergehäuse 5 wird verriegelt. Durch Hineindrücken der Entriegelungsstifte 1 springen die Druckknopfkörper 3 wieder in ihre entriegelnde Position und das Steckverbindergehäuse 5 wird wieder entriegelt.

Dieses Bedienkonzept ist sehr komfortabel und in hohem Maße selbsterklärend.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Im Rahmen des durch die Ansprüche definierten Schutzbereiches können einander entsprechende Einheiten oder Merkmalskomplexe aus unterschiedlichen Ausführungsbeispielen miteinander ausgetauscht werden.

### Bezugszeichenliste

- 1: Entriegelungsstift
- 10: Aufnahmeausnehmung
- 14: Entriegelungsausnehmung
- 147: Rückstellschräge
- 15: zylindrischer Stiftabschnitt

- 2: erste Feder, Spiralfeder
- 2': zweite Feder, Kegelfeder

- 3: Druckknopfkörper
- 30: Entriegelungsöffnung
- 31: erstes Ende
- 32: zweites Ende
- 33: Druckknopfkopf
- 34: Verriegelungsöffnung
- 35: zylindrischer Abschnitt
- 37: konischer Endabschnitt

- 4: Verriegelungselemente/ Verriegelungskugeln

- 5: Steckverbindergehäuse
- 50: Durchgangsöffnung des Steckverbindergehäuses
- 52: Halteausnehmung
- 53: Aufnahme
- 54: Verriegelungsausnehmung
- 55: zylindrischer Bereich
- 5', 5": erstes, zweites Gehäuseteil

- 6: Kugelkäfig

## Patentansprüche

1. System aus einem Steckverbindergehäuse (5) und einer Druckknopfverriegelung, wobei die Druckknopfverriegelung zumindest folgendes aufweist:
a. Einen Druckknopfkörper (3), der an seinem ersten Ende (31) beginnend und in Richtung seines gegenüberliegenden zweiten Endes (32) verlaufend eine Entriegelungsöffnung (30) zur Aufnahme eines Entriegelungsstifts (1) besitzt;
b. den in der Entriegelungsöffnung (30) relativ zum Druckknopfkörper (3) beweglich angeordneten und dadurch betätigbaren Entriegelungsstift (1), der in seiner unbetätigten Stellung eine das Steckverbindergehäuse (5) verriegelnde sowie in seiner betätigten Stellung eine das Steckverbindergehäuse (5) entriegelnde Funktion erfüllen kann;
c. eine erste Feder (2) zum Aufbringen einer ersten Rückstellkraft zum Überführen des Entriegelungsstifts (1) von seiner betätigten Stellung in seine unbetätigte Stellung;
d. eine zweite Feder (2') zum Erzeugen einer zweiten Rückstellkraft, zum Überführen des Druckknopfkörpers (3) von einer das Steckverbindergehäuse (5) verriegelnden in eine das Steckverbindergehäuse (5) entriegelnde Position;
e. mindestens ein zumindest bereichsweise im oder am Druckknopfkörper (3) beweglich angeordnetes Verriegelungselement (4) zum Zusammenwirken mit dem Entriegelungsstift (1), dem Druckknopfkörper (3) und dem Steckverbindergehäuse (5); f. wobei der Druckknopfkörper (3) mindestens eine Verriegelungsöffnung (34) zur zumindest teilweisen Aufnahme des mindestens einen Verriegelungselements (4) besitzt, wobei die mindestens eine Verriegelungsöffnung (34) die Oberfläche des Druckknopfkörpers (3) mit seiner Entriegelungsöffnung (30) verbindet,
g. wobei das mindestens eine Verriegelungselement (4) beweglich in der mindestens einen Verriegelungsöffnung (34) des Druckknopfkörpers (3) angeordnet ist,
h. wobei der Entriegelungsstift (1) eine Außenkontur aufweist, welche mit dem mindestens einen Verriegelungselement (4) zusammenwirkt, um das mindestens eine Verriegelungselement (4) in der mindestens einen Verriegelungsöffnung (34) zu bewegen,
i. wobei die Außenkontur des Entriegelungsstifts (1) zumindest eine Entriegelungsausnehmung (14) besitzt,
j. wobei die Entriegelungsausnehmung (14) eine Rückstellschräge (147) aufweist,
k. wobei das Steckverbindergehäuse (5) eine Durchgangsöffnung (50) besitzt, in welcher der Druckknopfkörper (3) beweglich gehalten ist, um sowohl seine besagte, das Steckverbindergehäuse (5) verriegelnde als auch seine das Steckverbindergehäuse (5) entriegelnde Position einnehmen zu können;
l. wobei es sich bei dem mindestens einen Verriegelungselement um eine Verriegelungskugel (4) handelt, **dadurch gekennzeichnet, dass**
m. die Durchgangsöffnung (50) eine Innenkontur mit einer ringförmig umlaufenden Halteausnehmung (52) und einer ringförmig umlaufenden Verriegelungsausnehmung (54) besitzt,
n. wobei die Halteausnehmung (52) der Durchgangsöffnung (50), das Verriegelungselement (4) und die Rückstellschräge (147) der Entriegelungsausnehmung (14) des Entriegelungsstifts (1) dazu eingerichtet sind, den Druckknopfkörper (3) in seiner entriegelnden Position am Steckverbindergehäuse (5) lösbar zu halten, indem die Verriegelungskugel (4) in die Halteausnehmung (52) eintaucht und der Entriegelungsstift (1) mit seiner Rückstellschräge (147) an der Verriegelungskugel (4) gehalten ist.

2. System gemäß Anspruch 1, **dadurch gekennzeichnet, dass** das Verriegelungselement (4) in der verriegelnden Position des
Druckknopfkörpers (3) durch die Rückstellkraft der ersten Feder (2) mittels der Rückstellschräge (147) zur Verriegelung des Druckknopfkörpers (3) in die Verriegelungsausnehmung (54) der Durchgangsöffnung eingreift und dadurch gleichzeitig den Entriegelungsstift (1) zur automatischen Überführung in seine unbetätigte Stellung durch die Rückstellkraft der ersten Feder (2) freigibt.

3. System nach einem der vorstehenden Ansprüche, wobei die Entriegelungsöffnung (30) im Wesentlichen zylindrisch ausgebildet ist und wobei der Entriegelungsstift (1) ebenfalls zylindrisch ausgebildet ist oder zumindest einen im Wesentlichen zylindrischen Stiftabschnitt (15) besitzt, wobei der Durchmesser des Entriegelungsstifts (1) oder der Durchmesser seines zylindrischen Stiftabschnitts (15) kleiner oder gleich dem Durchmesser der Entriegelungsöffnung (30) ist, wodurch der Entriegelungsstift (1) im Druckknopfkörper (3) beweglich und dadurch betätigbar ist.

4. System nach einem der vorstehenden Ansprüche, wobei es sich bei der ersten Feder (2) um eine Spiralfeder handelt, die in der Entriegelungsöffnung (30) zwischen dem zweiten Ende (32) des Druckknopfkörpers (3) und zumindest an einem Teil des Entriegelungsstifts (1) angeordnet ist, um die besagte erste Rückstellkraft auf ihn auszuüben.

5. System nach Anspruch 4, wobei der Entriegelungsstift (1) eine
Aufnahmeausnehmung (10) besitzt, in welche die erste Feder (2) eingreift.

6. System gemäß einem der vorstehenden Ansprüche, wobei das Steckverbindergehäuse (5) aus zumindest zwei Gehäuseteilen (5', 5") besteht, wobei zumindest eines der beiden Gehäuseteile (5', 5") an zwei einander gegenüberliegenden Gehäusewänden je eine Durchgangsöffnung (50) aufweist, wobei zur Verriegelung des Steckverbindergehäuses (5) in jeder der beiden Durchgangsöffnungen (50) je ein Druckknopfkörper (5) angeordnet ist, wobei diese beiden Druckknopfkörper (3) zur Ver- und Entriegelung der Steckverbindergehäuses (5) händisch auf einander zu sowie durch die besagte zweite Feder (2') voneinander weg bewegbar sind.

7. System nach Anspruch 6, wobei es sich bei der zweiten Feder (2')
um eine Kegelfeder handelt, die einerseits am Steckverbindergehäuse (5) und andererseits am Druckknopfkörper (3) angreift.

8. System nach einem der Ansprüche 6 bis 7, wobei jede der beiden
Durchgangsöffnungen (50) mindestens eine Verriegelungsausnehmung (54) aufweist, die mit den Verriegelungselementen (4) zusammenwirkt, um den Druckknopfkörper (3) am Steckverbindergehäuse (5) zu fixieren oder freizugeben.

9. System nach einem der Ansprüche 6 bis 8, wobei der
Entriegelungsstift (1) in seiner betätigten Stellung den Verriegelungselementen (4) ein tieferes Eintauchen in den Druckknopfkörper (3) gestattet als in seiner unbetätigten Stellung.

10. System nach Anspruch 9, wobei der Entriegelungsstift (1) in seiner
betätigten Stellung mit mindestens einer an seiner Oberfläche befindlichen Entriegelungsausnehmung (14) an dem mindestens einen Verriegelungselement (4) angeordnet ist, um dessen tieferes Eintauchen in den Druckknopfkörper (3) zu ermöglichen, um somit das mindestens eine Verriegelungselement (4) aus der Verriegelungsausnehmung (54) des Steckverbindergehäuses (5) zu entfernen.

11. System gemäß einem der Ansprüche 6 bis 10, wobei der
Druckknopfkörper (3) an seinem zweiten Ende (32) einen konischen Verlauf besitzt, um damit einen Ver- und Entriegelungsmechanismus des Steckverbindergehäuses (5) zu betätigen.

12. Verfahren zur Entriegelung eines Steckverbindergehäuses mit den folgenden Schritten:
A. Betätigen eines Entriegelungsstifts (1) durch händisches Einschieben des Entriegelungsstifts (1) in eine Entriegelungsöffnung (30) eines am Steckverbindergehäuse (5) fixierten Druckknopfkörpers (30) entgegen einer ersten Rückstellkraft einer ersten Feder (2), dadurch
B. tieferes Eintauchen des mindestens einen Verriegelungselements (4) in den Druckknopfkörper (3) durch Zusammenwirken der Außenkontur des Entriegelungsstifts (1) mit dem Verriegelungselement (4), dadurch
C. Lösen der Fixierung des Druckknopfkörpers (3) vom Steckverbindergehäuse (5) durch Zusammenwirken des Verriegelungselements (4) mit einer Innenkontur einer Durchgangsöffnung (50), in welcher der Druckknopfkörper (3) beweglich gehalten ist, dadurch
D. automatisches Überführen des Druckknopfkörpers (3) in eine das Steckverbindergehäuse (5) entriegelnde Position durch eine zweite Rückstellkraft einer zweiten Feder (2'); **gekennzeichnet durch**
E. Positionieren des mindestens einen Verriegelungselements (4) an einer Halteausnehmung (52) des Steckverbindergehäuses (5) und gleichzeitig Hineindrücken des Verriegelungselements (4) in die Halteausnehmung (52) **durch** die erste Feder (2) in Zusammenwirkung mit einer Rückstellschrägen (147) des Entriegelungsstifts (1).

13. Verfahren nach Anspruch 12, wobei das im Verfahrensschritt B beschriebene Zusammenwirken der Außenkontur des Entriegelungsstifts (1) mit dem Verriegelungselement (4) in einem Bewegen mindestens einer Entriegelungsausnehmung (14) des Entriegelungsstifts (1) hin zu dem mindestens einen Verriegelungselement (4) besteht, wodurch das besagte tiefere Eintauchen des mindestens einen Verriegelungselements (4) in den Druckknopfkörper (3) ermöglicht wird.

14. Verfahren zur Verriegelung eines Steckverbindergehäuses, mit den folgenden Schritten:
I. Händisches Hineindrücken mindestens eines zunächst entriegelten Druckknopfkörpers (3) in eine Durchgangsöffnung (50) einer Gehäuseseite eines Steckverbindergehäuses (5), in welcher der Druckknopfkörper (3) beweglich gehaltenen ist; dadurch
II. automatisches Halten eines in dem Druckknopfkörper (3) aufgenommenen Entriegelungsstifts (1) in einer den Entriegelungsstift (1) am Druckknopfkörper (3) fixierenden Position;
III. Bewegen des Druckknopfkörpers (3) mit seiner mindestens einen Verriegelungsöffnung (34) und einem darin aufgenommenen mindestens einen Verriegelungselement (4) zu einer Verriegelungsausnehmung (54) der Durchgangsöffnung (50);
IV. Fixieren des Druckknopfkörpers (3) am Steckverbindergehäuse (5) in seiner verriegelnden Position durch ein Zusammenwirken zwischen dem jeweiligen Entriegelungsstift (1), dem jeweiligen Druckknopfkörper (3) und der jeweiligen Durchgangsöffnung (50) mit dem mindestens einen Verriegelungselement (4) mittels der Verriegelungsausnehmung (54) der Durchgangsöffnung (50), **dadurch gekennzeichnet, dass** in den Verfahrensschritten II und III der Entriegelungsstift (1) am Druckknopfkörper (3) durch ein Zusammenwirken des Verriegelungselements (4) mit einer Innenkontur der Durchgangsöffnung (50) fixiert wird.

15. Verfahren gemäß Anspruch 14, wobei in Punkt IV der
Druckknopfkörper (3) am Steckverbindergehäuse (5) durch Zusammenwirken des Verriegelungselements (4) mit einer Außenkontur des Entriegelungsstifts (1) und der Verriegelungsausnehmung (54) der Durchgangsöffnung (50) fixiert wird.

## Claims

1. System composed of a plug-in connector housing (5) and a push-button lock, wherein the push-button lock is composed of at least the following:
a. a push-button body (3) which, beginning at the first end (31) thereof and extending- in the direction of the opposite second end (32) thereof, has an unlocking opening (30) for receiving an unlocking pin (1);
b. the unlocking pin (1) which is arranged in the unlocking opening (30) so as to be movable relative to the push-button body (3) and as a result is actuatable, and in the non-actuated position thereof is able to fulfil a function locking the plug-in connector housing (5) and in the actuated position thereof is able to fulfil a function unlocking the plug-in connector housing (5);
c. a first spring (2) for applying a first restoring force for transferring the unlocking pin (1) from the actuated position thereof to the non-actuated position thereof;
d. a second spring (2') for generating a second restoring force, for transferring the push-button body (3) from a position locking the plug-in connector housing (5) to a position unlocking the plug-in connector housing (5);
e. at least one locking element (4) which is arranged so as to be movable at least in regions in or on the push-button body (3) for interacting with the unlocking pin (1), the push-button body (3) and the plug-in connector housing (5);
f. wherein the push-button body (3) has at least one locking opening (34) for at least partially receiving the at least one locking element (4), wherein the at least one locking opening (34) connects the surface of the push-button body (3) to the unlocking opening (30) thereof,
g. wherein the at least one locking element (4) is arranged as to be movable in the at least one locking opening (34) of the push-button body (3),
h. wherein the unlocking pin (1) comprises an external contour which interacts with the at least one locking element (4) in order to move the at least one locking element (4) to the at least one locking position (34),
i. wherein the external contour of the unlocking pin (1) includes at least one unlocking recess (14),
j. wherein the unlocking recess (14) comprises a restoring chamfer (147),
k. wherein the plug-in connector housing (5) has a through-opening (50) in which the push-button body (3) is movably held so as to be able to assume said position thereof that locks the plug-in connector housing (5) as well as the position thereof that unlocks the plug-in connector housing (5); **characterized in that**
l. wherein the at least one locking element is a locking ball (4),
m. the through-opening (50) has an internal contour having an annular encircling holding recess (52) and an annular encircling locking recess (54);
n. wherein the holding recess (52) of the through-opening (50), the locking element (4) and the restoring chamfer (147) of the unlocking recess (14) of the unlocking pin (1) are specified for releasably holding the push-button body (3) in the unlocking position thereof on the plug-in connector housing (5) **in that** the locking ball (4) plunges into the holding recess (52) and the unlocking pin (1) by way of the restoring chamfer (147) thereof is held on the locking ball (4).

2. System according to Claim 1, **characterized in that** the locking element (4), in the locking position of the push-button body (3), engages in the locking recess (54) of the through-opening as a result of the restoring force of the first spring (2) by means of the restoring chamfer (147) for locking the push-button body (3) and, as a result, simultaneously releases the unlocking pin (1) for automatically transferring the latter to the non-actuated position thereof as a result of the restoring force of the first spring (2).

3. System according to one of the preceding claims, wherein the unlocking opening (30) is configured so as to be substantially cylindrical, and wherein the unlocking pin (1) is likewise configured so as to be cylindrical or has at least one substantially cylindrical pin portion (15), wherein the diameter of the unlocking pin (1) or the diameter of the cylindrical pin portion (15) thereof is smaller than or equal to the diameter of the unlocking opening (30), as a result of which the unlocking pin (1) is movable in the push-button body (3) and as a result is actuatable.

4. System according to one of the preceding claims, wherein the first spring (2) is a helical spring which is arranged in the unlocking opening (30) between the second end (32) of the push-button body (3) and at least on part of the unlocking pin (1) so as to exert on the latter said first restoring force.

5. System according to Claim 4, wherein the unlocking pin (1) has a receiving recess (10) in which the first spring (2) engages.

6. System according to one of the preceding claims, wherein the plug-in connector housing (5) is composed of at least two housing parts (5ʹ, 5ʺ), wherein at least one of the two housing parts (5', 5ʺ) comprises a through-opening (50) on each of two mutually opposite housing walls, wherein for locking the plug-in connector housing (5) one push-button body (5) is in each case arranged in each of the two through-openings (50), wherein said two push-button bodies (3) are movable manually toward one another and by means of said second spring (2') away from one another for locking and unlocking the plug-in connector housing (5).

7. System according to Claim 6, wherein the second spring (2') is a conical spring which engages on the plug-in connector housing (5), on the one hand, and on the push-button body (3), on the other hand.

8. System according to either of Claims 6 and 7, wherein each of the two through-openings (50) comprises at least one locking recess (54) which interacts with the locking elements (4) in order to fix the push-button body (3) on the plug-in connector housing (5), or to release said push-button body (3) from the latter.

9. System according to one of Claims 6 to 8, wherein the unlocking pin (1) in the actuated position thereof allows the locking elements (4) to be inserted deeper into the push-button body (3) than in the non-actuated position thereof.

10. System according to Claim 9, wherein the unlocking pin (1) in the actuated position thereof by way of at least one unlocking recess (14) situated on the surface thereof is arranged on the at least one locking element (4) in order to enable the former to be inserted deeper into the push-button body (3) so as to consequently remove the at least one locking element (4) from the locking recess (54) of the plug-in connector housing (5).

11. System according to one of Claims 6 to 10, wherein the push-button body (3) on the second end (32) thereof has a conical profile so as to actuate a locking and unlocking mechanism of the plug-in connector housing (5) by way of said conical profile.

12. Method for unlocking a plug-in connector housing, comprising the following steps:
A. actuating an unlocking pin (1) by manually inserting the unlocking pin (1) into an unlocking opening (30) of a push-button body (30) fixed on the plug-in connector housing (5) counter to a first restoring force of a first spring (2), as a result thereof
B. inserting the at least one locking element (4) deeper into the push-button body (3) as a result of interaction between the external contour of the unlocking pin (1) and the locking element (4), as a result thereof
C. releasing the fixing of the push-button body (3) from the plug-in connector housing (5) as a result of interaction between the locking element (4) and an internal contour of a through-opening (50) in which the push-button body (3) is movably held, as a result thereof
D. automatically transferring the push-button body (3) to a position unlocking the plug-in connector housing (5) as a result of a second restoring force of the second spring (2');
**characterized by**
E. positioning the at least one locking element (4) at a holding recess (52) of the plug-in connector housing (5), while simultaneously pressing the locking element (4) into the holding recess (52) as a result of the first spring (2) interacting with a restoring chamfer (147) of the unlocking pin (1).

13. Method according to Claim 12, wherein the interaction between the external contour of the unlocking pin (1) and the locking element (4) described in method step B consists in at least one unlocking recess (14) of the unlocking pin. (1) moving toward the at least one locking element (4), as a result of which said deeper insertion of the at least one locking element (4) into the push-button body (3) is enabled.

14. Method for locking a plug-in connector housing, comprising the following steps:
I. manually pressing at least one initially unlocked push-button body (3) into a through-opening (50) of a housing side of a plug-in connector housing (5) in which the push-button body (3) is movably held; as a result thereof
II. automatically holding an unlocking pin (1) received in the push-button body (3) in a position fixing the unlocking pin (1) on the push-button body (3);
III. moving the push-button body (3) with the at least one locking opening (34) thereof and an at least one locking element (4) received therein to a locking recess' (54) of the through-opening (50);
IV. fixing the push-button body (3) in the locking position thereof on the plug-in connector housing (5) as a result of interaction between the respective unlocking pin (1), the respective push-button body (3) as well as the respective through-opening (50) and the at least one locking element (4) by means of the locking recess (54) of the through-opening (50), **characterized in that** in method steps II and III the unlocking pin (1) is fixed on the push-button body (3) as a result of interaction between the locking element (4) and an internal contour of the through-opening (50).

15. Method according to Claim 14, wherein in point IV the push-button body (3) is fixed on the plug-in connector housing (5) as a result of interaction between the locking element (4) and an external contour of the unlocking pin (1) and the locking recess (54) of the through-opening (50).

## Revendications

1. Système constitué d'un boîtier de connecteur enfichable (5) et d'un verrouillage à bouton-poussoir, le verrouillage à bouton-poussoir présentant au moins les éléments suivants :
a. un corps de bouton-poussoir (3) qui comporte une ouverture de déverrouillage (30), commençant à sa première extrémité (31) et s'étendant en direction de sa deuxième extrémité (32) opposée, pour la réception d'une goupille de déverrouillage (1) ;
b. la goupille de déverrouillage (1) disposée de manière amovible par rapport au corps de bouton-poussoir (3) dans l'ouverture de déverrouillage (30) et pouvant ainsi être actionnée, laquelle goupille, dans sa position non actionnée, peut remplir une fonction de verrouillage du boîtier de connecteur enfichable (5) et, dans sa position actionnée, peut remplir une fonction de déverrouillage du boîtier de connecteur enfichable (5) ;
c. un premier ressort (2) servant à l'application d'une première force de rappel pour le transfert de la goupille de déverrouillage (1) de sa position actionnée à sa position non actionnée ;
d. un deuxième ressort (2') servant à générer une deuxième force de rappel, pour le transfert du corps de bouton-poussoir (3) d'une position verrouillant le boîtier de connecteur enfichable (5) à une position déverrouillant le boîtier de connecteur enfichable (5) ;
e. au moins un élément de verrouillage (4) disposé de manière mobile dans ou sur le corps de bouton-poussoir (3) au moins dans certaines régions pour coopérer avec la goupille de déverrouillage (1), le corps de bouton-poussoir (3) et le boîtier de connecteur enfichable (5) ;
f. le corps de bouton-poussoir (3) comportant au moins une ouverture de verrouillage (34) servant à la réception au moins partielle de l'au moins un élément de verrouillage (4), l'au moins une ouverture de verrouillage (34) reliant la surface du corps de bouton-poussoir (3) à son ouverture de déverrouillage (30),
g. l'au moins un élément de verrouillage (4) étant disposé de manière mobile dans l'au moins une ouverture de verrouillage (34) du corps de bouton-poussoir (3),
h. la goupille de déverrouillage (1) présentant un contour extérieur, lequel coopère avec l'au moins un élément de verrouillage (4), afin de déplacer l'au moins un élément de verrouillage (4) dans l'au moins une ouverture de verrouillage (34),
i. le contour extérieur de la goupille de déverrouillage (1) comportant au moins un évidement de déverrouillage (14),
j. l'évidement de déverrouillage (14) présentant un biseau de rappel (147),
k. le boîtier de connecteur enfichable (5) comportant une ouverture traversante (50) dans laquelle le corps de bouton-poussoir (3) est retenu de manière mobile, afin de pouvoir adopter à la fois sa dite position verrouillant le boîtier de connecteur enfichable (5) et sa dite position déverrouillant le boîtier de connecteur enfichable (5) ;
l. l'au moins un élément de verrouillage étant une bille de verrouillage (4), **caractérisé en ce que**
m. l'ouverture traversante (50) comporte un contour intérieur doté d'un évidement de retenue (52) circonférentiel annulaire et d'un évidement de verrouillage (54) circonférentiel annulaire,
n. l'évidement de retenue (52) de l'ouverture traversante (50), l'élément de verrouillage (4) et le biseau de rappel (147) de l'évidement de déverrouillage (14) de la goupille de déverrouillage (1) étant conçus pour retenir de manière amovible le corps de bouton-poussoir (3) dans sa position de déverrouillage sur le boîtier de connecteur enfichable (5), par le fait que la bille de verrouillage (4) pénètre dans l'évidement de retenue (52) et la goupille de déverrouillage (1) est retenue, par son biseau de rappel (147), sur la bille de verrouillage (4).

2. Système selon la revendication 1, **caractérisé en ce que** l'élément de verrouillage (4), dans la position de verrouillage du corps de bouton-poussoir (3), vient en prise dans l'évidement de verrouillage (54) de l'ouverture traversante par le biais de la force de rappel du premier ressort (2) au moyen du biseau de rappel (147) pour le verrouillage du corps de bouton-poussoir (3) et ainsi libère simultanément la goupille de déverrouillage (1) pour le transfert automatique à sa position non actionnée, par le biais de la force de rappel du premier ressort (2).

3. Système selon l'une des revendications précédentes, l'ouverture de déverrouillage (30) étant réalisée de manière sensiblement cylindrique et la goupille de déverrouillage (1) étant également réalisée de manière cylindrique ou comportant au moins une partie de goupille (15) sensiblement cylindrique, le diamètre de la goupille de déverrouillage (1) ou le diamètre de sa partie de goupille (15) cylindrique étant inférieur ou égal au diamètre de l'ouverture de déverrouillage (30), de sorte que la goupille de déverrouillage (1) soit mobile dans le corps de bouton-poussoir (3) et puisse ainsi être actionnée.

4. Système selon l'une des revendications précédentes, le premier ressort (2) étant un ressort spiral qui est disposé dans l'ouverture de déverrouillage (30) entre la deuxième extrémité (32) du corps de bouton-poussoir (3) et au moins sur une partie de la goupille de déverrouillage (1), afin de d'exercer ladite première force de rappel sur celui-ci.

5. Système selon la revendication 4, la goupille de déverrouillage (1) comportant un évidement de réception (10) dans lequel le premier ressort (2) vient en prise.

6. Système selon l'une des revendications précédentes, le boîtier de connecteur enfichable (5) étant constitué d'au moins deux parties de boîtier (5ʹ, 5ʺ), au moins l'une des deux parties de boîtier (5ʹ, 5ʺ) présentant respectivement une ouverture traversante (50) sur deux parois de boîtier opposées l'une à l'autre, un corps de bouton-poussoir (5) étant disposé respectivement dans chacune des deux ouvertures traversantes (50) pour le verrouillage du boîtier de connecteur enfichable (5), ces deux corps de bouton-poussoir (3) étant mobiles manuellement l'un vers l'autre ainsi qu'à l'écart l'un de l'autre par le biais dudit deuxième ressort (2') pour le verrouillage et le déverrouillage du boîtier de connecteur enfichable (5).

7. Système selon la revendication 6, le deuxième ressort (2') étant un ressort conique qui agit d'un côté sur le boîtier de connecteur enfichable (5) et de l'autre côté sur le corps de bouton-poussoir (3).

8. Système selon l'une des revendications 6 à 7, chacune des deux ouvertures traversantes (50) présentant au moins un évidement de verrouillage (54) qui coopère avec les éléments de verrouillage (4) afin de fixer le corps de bouton-poussoir (3) sur le boîtier de connecteur enfichable (5) ou de le libérer.

9. Système selon l'une des revendications 6 à 8, la goupille de déverrouillage (1), dans sa position actionnée, permettant aux éléments de verrouillage (4) de pénétrer plus profondément dans le corps de bouton-poussoir (3) que dans sa position non actionnée.

10. Système selon la revendication 9, la goupille de déverrouillage (1), dans sa position actionnée, étant disposée avec au moins un évidement de déverrouillage (14) se trouvant sur sa surface au niveau de l'au moins un élément de verrouillage (4), afin de lui permettre de pénétrer plus profondément dans le corps de bouton-poussoir (3), afin de retirer ainsi l'au moins un élément de verrouillage (4) de l'évidement de verrouillage (54) du boîtier de connecteur enfichable (5).

11. Système selon l'une des revendications 6 à 10, le corps de bouton-poussoir (3) présentant à sa deuxième extrémité (32) une allure conique, afin d'actionner ainsi un mécanisme de verrouillage et de déverrouillage du boîtier de connecteur enfichable (5).

12. Procédé de déverrouillage d'un boîtier de connecteur enfichable comportant les étapes suivantes :
A. actionnement d'une goupille de déverrouillage (1) par insertion manuelle de la goupille de déverrouillage (1) dans une ouverture de déverrouillage (30) d'un corps de bouton-poussoir (30) fixé sur le boîtier de connecteur enfichable (5) à l'encontre d'une première force de rappel d'un premier ressort (2), ainsi
B. pénétration plus profonde de l'au moins un élément de verrouillage (4) dans le corps de bouton-poussoir (3) par coopération du contour extérieur de la goupille de déverrouillage (1) avec l'élément de verrouillage (4), ainsi
C. libération de la fixation du corps de bouton-poussoir (3) du boîtier de connecteur enfichable (5) par coopération de l'élément de verrouillage (4) avec un contour intérieur d'une ouverture traversante (50) dans laquelle le corps de bouton-poussoir (3) est retenu de manière mobile, ainsi
D. transfert automatique du corps de bouton-poussoir (3) dans une position déverrouillant le boîtier de connecteur enfichable (5) par le biais d'une deuxième force de rappel d'un deuxième ressort (2') ;
**caractérisé par**
E. le positionnement de l'au moins un élément de verrouillage (4) au niveau d'un évidement de retenue (52) du boîtier de connecteur enfichable (5) et simultanément enfoncement de l'élément de verrouillage (4) dans l'évidement de retenue (52) par le biais du premier ressort (2) en coopération avec un biseau de rappel (147) de la goupille de déverrouillage (1).

13. Procédé selon la revendication 12, la coopération, décrite à l'étape de procédé B, du contour extérieur de la goupille de déverrouillage (1) avec l'élément de verrouillage (4) consistant en un déplacement d'au moins un évidement de déverrouillage (14) de la goupille de déverrouillage (1) vers l'au moins un élément de verrouillage (4), de sorte que ladite pénétration plus profonde de l'au moins un élément de verrouillage (4) dans le corps de bouton-poussoir (3) soit rendue possible.

14. Procédé de verrouillage d'un boîtier de connecteur enfichable, comportant les étapes suivantes :
I. enfoncement manuel d'au moins un corps de bouton-poussoir (3) tout d'abord déverrouillé dans une ouverture traversante (50) d'un côté d'un boîtier de connecteur enfichable (5) dans lequel le corps de bouton-poussoir (3) est retenu de manière mobile ; ainsi
II. retenue automatique d'une goupille de déverrouillage (1) reçue dans le corps de bouton-poussoir (3) dans une position fixant la goupille de déverrouillage (1) sur le corps de bouton-poussoir (3) ;
III. déplacement du corps de bouton-poussoir (3) avec son au moins une ouverture de verrouillage (34) et au moins un élément de verrouillage (4) reçu dans celle-ci jusqu'à un évidement de verrouillage (54) de l'ouverture traversante (50) ;
IV. fixation du corps de bouton-poussoir (3) sur le boîtier de connecteur enfichable (5) dans sa position de verrouillage par une coopération entre la goupille de déverrouillage (1) respective, le corps de bouton-poussoir (3) respectif et l'ouverture traversante (50) respective avec l'au moins un élément de verrouillage (4) au moyen de l'évidement de verrouillage (54) de l'ouverture traversante (50), **caractérisé en ce qu'**aux étapes de procédé II et III la goupille de déverrouillage (1) est fixée sur le corps de bouton-poussoir (3) par une coopération de l'élément de verrouillage (4) avec un contour intérieur de l'ouverture traversante (50).

15. Procédé selon la revendication 14, dans lequel, au point IV, le corps de bouton-poussoir (3) est fixé sur le boîtier de connecteur enfichable (5) par coopération de l'élément de verrouillage (4) avec un contour extérieur de la goupille de déverrouillage (1) et de l'évidement de verrouillage (54) de l'ouverture traversante (50).
